Europäisches Patentamt

European Patent Office

Office européen des brevets

(11) Publication number: **0 123 081**
A2

# EUROPEAN PATENT APPLICATION

(21) Application number: **84102445.8**

(22) Date of filing: **07.03.84**

(51) Int. Cl.³: **G 11 B 5/70**

(30) Priority: **09.03.83 US 473544**
**31.08.83 US 528044**
**13.02.84 US 578018**

(43) Date of publication of application:
**31.10.84 Bulletin 84/44**

(84) Designated Contracting States:
**BE DE FR GB IT NL**

(71) Applicant: **DeSOTO, INC.**
**1700 South Mt. Prospect Road**
**Des Plaines Illinois 60018(US)**

(72) Inventor: **Ansel, Robert E.**
**1440 Caldwell Lane**
**Hoffman Estates Illinois, 60 194(US)**

(74) Representative: **Reitzner, Bruno, Dr. et al,**
**Patentanwälte Dipl.-Ing. R. Splanemann Dr. B. Reitzner**
**Tal 13**
**D-8000 München 2(DE)**

(54) Coatings for magnetic recording structures and production thereof.

(57) An electron beam-curable coating composition is disclosed in which magnetizable particles are dispersed in a liquid vehicle comprising at least one viscous nonpourable liquid to normally solid polyethylenically unsaturated compound having at least 2.5 repeating units held together by urethane linkages. The repeating units are polyether diol groups having a molecular weight in the range of 500 to 2500, and the polyethylenically unsaturated compound has an average of at least two ethylenically unsaturated groups per molecule and an average of one ethylenically unsaturated group per from 750 to 10,000 units of molecular weight. The compound is preferably used in a solution containing volatile organic solvent and a low molecular weight polyacrylate.

EP 0 123 081 A2

-1-

# COATINGS FOR MAGNETIC RECORDING STRUCTURES
## AND PRODUCTION THEREOF
## DESCRIPTION

Field of Invention

This invention relates to coating compositions which are curable with electron beam radiation to enable the rapid production of magnetic recording structures, such as tapes or disks, in which a layer of magnetizable particles is dispersed in a solidified thermoset coating vehicle on a nonmagnetizable substrate.

Background Art

The production of magnetic recording structures, such as tapes and disks, is known. In these known processes, a liquid coating composition which has been pigmented with particles, which are usually oxide particles, and which have the capacity to retain a magnetic orientation, is applied to an appropriate nonmagnetizable substrate. These particles are referred to hereinafter as magnetizable particles. The pigmented coating is then baked to solidify the coating and fix the magnetizable particles in place within the coating.

In the known processes, the magnetizable particles are used in admixture with a nonmagnetizable binder (which may be thermoplastic or thermosetting) and a volatile solvent is present to dissolve the binder and provide a solvent solution which is applied as a thin coating upon the substrate. The coated substrate is then force dried to remove the solvent. Some reactive binders are cured with polyisocyanates by prolonged storage in a

-2-

hot room, e.g.at (60°C)140°F. An illustrative process is shown in U. S. Pat. No. 4,246,316.

The known processes are slow, and the cure used may lack desired uniformity. Also, when isocyanate-functional materials are used, these have a limited pot life and are hard to work with. It is desired to employ electron beam radiation to rapidly cure a polyethylenically unsaturated coating liquid on the nonmagnetizable substrate, but the cured coatings produced in this fashion lack the physical toughness needed to provide a good product. In this connection, reference is made to Japanese Application No. 48-126778 which was laid open June 24, 1975 under No. 50-77433.

More recently, electron beam-cured magnetic recording structures have been made using acrylated urethane oligomers, but these require titanate coupling agents to enable the oligomers to wet the magnetizable particles (see Japanese Application No. 81-128005 laid open Feb. 21, 1983 under No. 58-29124). The achievement of improved wetting is an important aspect of this invention.

It should be appreciated that the electron beam curing process does provide many advantages, such as the use of stable coatings, greater speed of production, more uniform product quality, more compact equipment, and, per this invention, products of greater durability. It is for these reasons that it is desirable to develop oligomer systems which possess superior wetting characteristics.

Disclosure of Invention

In accordance with this invention, an electron beam-curable coating composition is provided in which magnetizable particles are dispersed in a liquid vehicle comprising at least one viscous nonpourable liquid to normally solid polyethylenically unsaturated compound having at least 2.5 repeating units (preferably at least 4) held together by urethane linkages, and preferably also with urea groups, and there is an average of one ethylenically unsaturated group per from 750 to 10,000 units of molecular weight. The repeating units are provided by polyether diols having a molecular weight in the range of 500 to 2500, more preferably from 600-1500, and this improves the wetting of the magnetizable pigment. Polyether diols based on oxyalkylene groups in which the alkylene radical contains three or four carbon atoms are particularly preferred, those with four being best, as in polytetramethylene glycols having the required molecular weight. The liquid vehicle has low viscosity to enable coating, and the status of the unsaturated compound is noted at 25°C.

This liquid coating is then applied to form a wet film thereof on a nonmagnetizable substrate. If the wet-coated substrate contains a volatile nonreactive solvent, as is usual, this volatile solvent is removed, as by vaporization at room or slightly elevated temperature. The usual coating, wet or dry and at room or elevated temperature, is then exposed to electron beam radiation to convert the unsaturated compound into a solid thermoset coating having magnetizable particles dispersed therein.

The polyethylenically unsaturated compounds in this invention are formed to contain a plurality of repeating units. These are held together by certain selected groups, as previously set forth. To illustrate how this is done, one can take an appropriate polyether diol, such as a polytetramethylene glycol having an average molecular weight of about 650, and react it with a

-4-

diisocyanate, like isophorone diisocyanate, to provide a linear oligomer which may be either isocyanate-terminated or hydroxy terminated, depending upon which functional group is in excess. By varying proportions, e.g., by using a 3:2 or 4:3 equivalent ratio between the functional groups which are interreacted, several repeating groups will be formed, and they will be linked by urethane groups.

When the oligomer noted above is isocyanate-terminated, particularly preferred results are obtained by further reaction with a diamine, like hexamethylene diamine, to provide an oligomer in which urea groups are present in addition to urethane groups. These urea groups add hardness and stiffness to the electron beam-cured coatings.

It will be understood that one can proceed in stages, as above indicated, or if a mixture of diamine and diol is used, that the linking groups in the oligomer which is initially formed will contain some urea groups and some urethane groups.

One can use a dimercaptan, like 1,6-hexane dimercaptan, in place of up to about 15% of the diol discussed previously, and the product will now be an oligomer in which the repeating units include thiocarbamate groups.

While difunctional materials have been illustrated above, higher functional materials may be included to form oligomers which are branched instead of linear. These higher functional materials are illustrated by trimethylol propane or pentaerythritol. Triisocyanates, like the biuret of hexamethylene diisocyante, are also useful. However, difunctional materials are preferred and constitute the bulk of the materials used.

The plurality of linkages of the type noted provides the oligomer with improved toughness, while the relatively high molecular weight polyethers provide the wetting which is needed to properly incorporate the magnetizable particles, especially in the high proportion which is normally needed. The oxyalkylene groups in the polyether preferably contain three or four carbon atoms, as in polyoxypropylene glycol or polytetramethylene glycol. The many variation which are permissible will be evident to those skilled in the art and are illustrated in the examples. Wetting agents may still be added in this invention, but the systems without the wetting agent are better, so one starts from a better position when adjuncts are added.

The oligomers described above are terminated with unsaturated groups, preferably with acrylate groups. This is easily done by using either 2-hydroxyethyl acrylate or its reaction product with one molar proportion of a diisocyanate, like isophorone diisocyanate, to provide an unsaturated monoisocyanate. 2-hydroxypropyl acrylate and 2-hydroxybutyl acrylate are also useful. An hydroxyalkyl acrylate is selected as the reactant when the oligomer is terminated with isocyanate functionality. The monoisocyante is selected when the oligomer is terminated with hydroxy groups. The corresponding methacrylates are also quite useful, but the acrylates cure more rapidly. Other less useful ethylenic groups are illustrated by allyl alcohol.

The coatings of this invention possess superior toughness enabling satisfactory magnetic recording structures of good quality to be rapidly produced.

The uncured coating formed by removal of organic solvent is a solid film, and it is preferably calendered or otherwise mechanically worked prior to

-6-

electron beam curing exposure.

The preferred polyethylenically unsaturated compounds have a molecular weight in the range of 1,500 to 20,000 and are derived from the reaction of reactants at least one of which is a difunctional reactant. It is particularly preferred to employ essentially linear polyethylenically unsaturated compounds formed by the reaction of a plurality of difunctional compounds, at least one of which is an organic diisocyanate, and that the linear structure be terminated by one acrylate group on each end thereof, as by a reaction with 2-hydroxyethyl acrylate or other acrylate containing a single hydroxy group, such as hydroxy propyl acrylate.

To minimize the presence of nonreactive volatile solvents, the coating composition is preferably thinned to near coating viscosity by the inclusion of liquid monoethylenic or liquid polyethylenic diluents which are reactive through their ethylenic unsaturation, as will be illustrated hereinafter.

The volatile solvents which are used are subject to wide variation. Thus, aromatic solvents, such as toluene, cycloaliphatic solvents, such as cyclohexanone, and heterocyclic solvents, such as tetrahydrofuran, are all useful herein and will be illustrated hereinafter.

Based on 100 parts of nonvolatile solids (which includes reactive volatile components) in the pigmented coating composition, it is preferred to employ from 50 to 400 parts of volatile solvent, preferably fro 100 to 300 parts. These solvents are removed, preferably by vaporization, prior to curing.

The pigmentation of the coatings with magnetizable particles in accordance with this invention will provide dispersions having from 50% to

-7-

85% by weight of pigment particles based on the total weight of the cured coating. It is convenient to apply coating compositions having from 25% to 50% of total nonvolatile solids.

Appropriate magnetizable particles are illustrated in the patent referred to previously and also in the examples of this application. These are well known and are the same in this invention as they are in the art. They are normally oxide particles.

The polyethylenicallay unsaturated compounds which have been described may be the only polymerizable material present in the coating composition, but it is preferred to include a proportion of low molecular weight polyacrylate containing at least 2 acrylate groups per molecule and having not more than 500 units of molecular weight per acrylate group. These are subject to wide variation, and several are used in the examples herein. More particularly, all sorts of liquid polyacrylates are available and may be used, such as butylene glycol diacrylate and trimethylol propane triacrylate, but it is preferred to use an organic polyisocyanate whose isocyanate functionality has been consumed by reaction with hydroxyethyl acrylate. Preferred polyisocyanates for this purpose are toluene diisocyanate and isophorone diisocyanate or a trimer thereof produced by forming an isocyanurate ring from three of the isocyanate groups in a reaction known per se. These will be illustrated in the examples. Also tris-hydroxyethyl isocyanurate triacrylate is another preferred polyacrylate, albeit it is not a liquid at room temperature.

It is preferred that the polyethylenically unsaturated compound constitute at least about 30% of the total polymerizable material in the coating

-8-

composition, more preferably at least about 50%. The low molecular weight polyacrylate will desirably be present in an amount of from 5% to about 70% of total polymerizable material, preferably in an amount of at least 10%.

Monoethylenically unsaturated material may also be present in small amount, as illustrated by N-vinyl pyrrolidone. Many other monomers are similarly useful, such as 2-hydroxyethyl acrylate.

In this application, all proportions are by weight, unless otherwise stated. Presently preferred compositons are illustrated in the following Table.

TABLE

| | A | B | C | D | E | F |
|---|---|---|---|---|---|---|
| Composition of Example 1 | 80 | | | | | |
| 2 | | 80 | | | | |
| 3 | | | 60 | 70 | | |
| 4 | | | | | 80 | 100 |
| Tris-hydroxyethyl isocyanurate triacrylate | | 20 | | | 20 | |
| Isophorone diisocyanate hydroxyethyl acrylate adduct | | | | | | |
| Isophorone diisocyanate trimer hydroxyethyl acrylate adduct | 20 | | 40 | 20 | | |
| N-vinyl pyrrolidone | | | | 10 | | |
| Tensile Strength kg/cm² (psi) | 281 (4000) | 113 (1600) | 400 (5700) | 260 (3700) | 232 (3300) | 197 (2800) |
| % Elongation | 240 | 95 | 74 | 100 | 84 | 210 |
| Modulus at 2 1/2% elongation | 10000 | 4100 | 67000 | 13000 | 64000 | 8100 |
| Energy of rupture cm kg/cm³ (lbs./cu.in.) | 562 (8000) | 98 (1400) | 400 (5700) | 260 (3700) | 288 (4100) | 352 (5000) |

Note 1: The proportions in the above Table are based on nonvolatile solids including volatile reactive solids.

Note 2: The characteristics reported are for a free film cured at 10 megarads and having a thickness in the range of 0,025-0,05 mm (1-2 mils).

-10-

The examples referred to in the Table are as follows:

Example 1

Into a suitable reaction vessel is placed 1250 grams (1.1 moles) of a toluene diisocyanate-terminated polytetramethylene glycol urethane in which the polytetramethylene glycol has a molecular weight of about 700 and the isocyanate-terminated urethane has a molecular weight of about 1900 and contains about 5-6 urethane groups (the du Pont product Adiprene L-200 may be used), 1500 grams of cyclohexanone, 1.3 grams of dibutyl tin dilaurate and 0.8 gram of phenothiazine. This mixture is heated to 40°C. and 42.8 grams (0.37 mole) of 2-hydroxyethyl acrylate is added. The reaction mixture is held at 40-50°C. for 1/2 hour. Then 207.6 grams (0.915 mole) of a diprimary amine-extended polyoxypropylene diamine of molecular weight 230 (Jeffamine D230 may be used) is added at a rate which maintains the temperature at 60°C. The reaction is continued until no free NCO remains. The product is a 50% solvent solution having a viscosity of 6500 centipoises.

Example 2

Example 1 is repeated except that the solvent used is toluene and the amine extender is made from one mole of Jeffamine D230 Michael adducted with 2 moles of 2-ethylhexyl acrylate. The product is a 50% solvent solution having a viscosity of 3800 centipoises. Since the Jeffamine reactant has two terminal primary amine groups, two secondary amine groups remain for reaction.

Example 3

Into a suitable reaction vessel is placed 540 grams (2.16 moles) of 4,4'-methylene bis phenylisocyanate (the Mobay product Mondur M may be

-11-

used), 1800 grams of tetrahydrofuran solvent and 1.7 grams of dibutyl tin dilaurate. The mixture is stirred while slowly adding 1154 grams (1.8 moles) of polytetramethylene glycol of average molecular weight 650 (the du Pont product Teracol 650 may be used) to keep the reaction temperature at 60°C. After addition is complete, hold the 60° temperature for 1 hour, and then add 83.5 grams (0.72 mole) of 2-hydroxyethyl acrylate and 0.9 gram of phenothiazine. The reaction is continued until no free NCO remains. The resulting product is a 50% organic solvent solution having a viscosity of 530 centipoises.

Example 4

Into a suitable reaction vessel place 736 grams (0.65 mole) of Adiprene L-200 (an isocyanate-terminated reaction product of polytetramethylene glycol of molecular weight 1000 with a 2:1 molar ratio excess of toluene diisocyanate), 774 grams of toluene, 018 gram of dibutyl tin dilaurate and 0.5 gram of phenothiazine. Add to this mixture 38 grams (.325 mole) of 2-hydroxyethyl acrylate and react 1/2 hour at 60°C. The temperature is then lowered to 40°C. and isophorone diisocyanate trimer containing an isocyanurate ring and three isocyanate groups is added in an amount of 81 grams dissolved in 81 grams of toluene (a 50% solution). 145 grams (0.65 mole) of Jeffamine D230 dissolved in 145 grams of toluene are then added at a rate which maintains the temperature in the range of 60-65°C. The reaction is continued until no free NCO remains. The resulting solution of trifunctional polymer is diluted to 30% solids with tetrahydrofuran to provide a solution having a viscosity of 250 centipoises.

The solution products described in the

-12-

foregoing examples, after blending with polyacrylates as noted in the Table, and pigmentation with magnetizable pigment (70% pigment based on nonvolatile solids( [HR 350 magnetizable pigment supplied by Hercules Incorporated] to provide a magnetic coating solution are applied to a nonmagnetic substrate. The substrate chosen is Mylar film, and the wet coating is first dried by passing the coated substrate through an oven. The purpose is to substantially completely remove the volatile solvent. When this has been done, a dry solid film coating is formed, and this solid film can be worked, as by calendering. Then, the coating can be quickly and easily cured to form a tough and durable thermoset coating by exposure to electron beam curing.

It is also appropriate to employ a pigment dispersant to facilitate dispersion of the pigment in the solution of reactive materials. These dispersants are themselves well known and are illustrated by the presence of 2% of the weight of the pigmented coating of Gafac RE-610, a product of GAF.

The use of mercaptan-functional material is illustrated by repeating example 1 while replacing half of the 0.915 mole of Jeffamine D230 used in that example with a corresponding molar proportion of 1,6-hexane dimercaptan. Corresponding results are obtained.

CLAIMS

1. An electron beam-curable coating composition in which magnetizable particles are dispersed in a liquid vehicle comprising at least one viscous nonpourable liquid to normally solid polyethylenically unsaturated compound having at least 2.5 repeating units held together by urethane linkages, said repeating units being provided by polyether diol groups having a molecular weight in the range of 500 to 2500, and said polyethylenically unsaturated compound having an average of at least two ethylenically unsaturated groups per molecule and an average of one ethylenically unsaturated group per from 750 to 10,000 units of molecular weight.

2. A coating composition as recited in claim 1 in which said repeating units have a molecular weight in the range of 600-1500.

3. A coating composition as recited in claim 1 in which said polyethylenically unsaturated compound has a molecular weight in the range of 1,500 to 20,000.

4. A coating composition as recited in claim 3 in which said polyethylenically unsaturated compound is derived from the reaction of reactants at least one of which is a difunctional reactant.

5. A coating composition as recited in claim 3 in which said polyethylenically unsaturated compound is an essentially linear polyethylenically unsaturated compound formed by the reaction of a plurality of difunctional compounds.

6. A coating composition as recited in claim 5 in which said polyethylenically unsaturated compound has an average of at least 4 repeating units having a molecular weight of 600-1500 and has acrylate terminal groups.

7. A coating composition as recited in claim 6 in which said polyethylenically unsaturated compound includes urea groups.

8. A coating composition as recited in claim 1 in which said polyether diol is based on oxyalkylene groups in which the alkylene radical contains three or four carbon atoms.

9. A coating composition as recited in claim 8 in which said polyether diol is a polytetramethylene glycol, and said ethylenic groups are acrylate groups.

10. A coating composition as recited in claim 1 in which the proportion of said polyethylenically unsaturated compound constitutes at least about 30% of the total polymerizable material in said coating composition.

11. A coating composition as recited in claim 6 in which the proportion of said polyethylenically unsaturated compound is at least about 50% of the total polymerizable material in said coating composition.

12. A coating composition as recited in claim 1 in which said composition includes from 5% up to about 70% of total polymerizable material of low molecular weight polyacrylate containing at least 2 acrylate groups per molecule and having not more than 500 units of molecular weight per acrylate group.

13. A coating composition as recited in claim 12 in which said composition includes at least 10% of said polyacrylate.

14. A coating composition as recited in claim 13 in which said polyacrylate is an isophorone diisocyanate trimer carrying three isocyanate groups which have been reacted with 2-hydroxyethyl acrylate.

15. A coating composition as recited in claim 1 in which said composition includes said magnetizable particles in an amount of from 50% to 85% based on the total solids content of the coating composition.

16. A coating composition as recited in claim 15 in which said composition contains volatile organic solvent in an amount providing a total nonvolatile solids content of 25% to 50%.

17. An electron beam-curable coating composition for depositing magnetic recording coatings on magnetizable substrates comprising nonreactive volatile organic solvent having magnetizable particles dispersed therein and having dissolved therein at least one viscous nonpourable liquid to normally solid polyethylenically unsaturated compound having at least 2.5 repeating units held together by urethane linkages, said repeating units being provided by polytetramethylene glycol groups having a molecular weight in the range of 500 to 2500, and said polyethylenically unsaturated compound having an average of at least two ethylenically unsaturated groups per molecule and an average of one ethylenically unsaturated group per from 750 to 10,000 units of molecular weight, and low molecular weight polyacrylate containing at least two acrylate groups per molecule and having not more than 500 units of molecular weight per acrylate group, said polyethylenically unsaturated compound constituting at least 50% of the total polymerizable material, said polyacrylate constituting at least 10% of the total polymerizable material, said magnetizable particles being present in an amount of from 50% to 85% based on the total solids content of the composition, and said solvent being present in an amount providing a total nonvolatile solids content of 25% to 50%.

18. A method of producing a magnetic recording structure comprising depositing on a nonmagnetizable substrate, a coating composition as defined in anyone of claims 1-17, removing any volatile nonreactive solvent present to form a solid film, and then exposing said solid film to electron beam radiation to cure the same.

19. A method as recited in claim 18 in which said solid film is mechanically worked prior to electron beam exposure.